# EUROPÄISCHE PATENTSCHRIFT

(11) **EP 1 381 815 B1**
(45) Veröffentlichungstag und Bekanntmachung des Hinweises auf die Patenterteilung: **29.07.2009**
(21) Anmeldenummer: 02740451.6
(22) Anmeldetag: 06.04.2002
(51) Int. Cl.: F24F 13/10

(54) **VERSTELLVORRICHTUNG**
ADJUSTER DEVICE
DISPOSITIF DE REGLAGE

(30) Priorität: 27.04.2001 DE 20107325 U
(43) Veröffentlichungstag der Anmeldung: 21.01.2004
(73) Patentinhaber: Elodrive GmbH Stellantriebstechnik, 32423 Minden (DE)
(72) Erfinder: SCHUNKE, Kurt, 32427 Minden (DE); BUCHHOLZ, Bernd, 32369 Rahden (DE); PALM, Dieter, 33824 Werther (DE); BRUNS, Gerhard, 30451 Hannover (DE)
(74) Vertreter: Specht, Peter
(86) Internationale Anmeldenummer: PCT/EP2002/003838
(87) Internationale Veröffentlichungsnummer: WO 2002/088606

(56) Entgegenhaltungen:
- EP-A- 0 229 446
- EP-A- 0 617 213
- EP-A- 0 642 954
- DE-A- 4 113 510
- DE-A- 19 540 323
- DE-A- 19 719 991
- US-A- 5 521 478

## Beschreibung

Die Erfindung betrifft eine Verstellvorrichtung für einstellbare Klappen in der Heizungs-, Lüftungs- und Klimatechnik mit einem Antriebsmotor, der mit einem Antriebszug gekoppelt ist, dessen Abtriebsglied mit einem Stellglied verbunden ist, mit einem Registriergerät zur Positionserkennung und/oder Positionseinstellung des Stellgliedes und/oder eines Bauelementes des Antriebszuges, wobei das Stellelement des Registriergerätes direkt mit dem Abtriebsglied des Antriebszuges formschlüssig, jedoch zahnradlos gekoppelt ist.

Die in Frage kommende Verstellvorrichtung ist besonders in der Heizungs-, Klima- und Lüftungstechnik einsetzbar. Sie wird verwendet, um beispielsweise Klappen in eine Öffnungs- oder Schließstellung zu bringen. Die jeweilige Verstellbewegung richtet sich danach, zu welchem Zweck sie verwendet wird. So kann es beispielsweise notwendig sein, daß im Brandfall die Klappen geöffnet oder geschlossen werden sollen. Für derartige Fälle ist es vorgeschrieben, daß die dann notwendige Schwenkbewegung des Stellgliedes nicht von dem Motor durchgeführt wird, sondern von einem Kraftspeicher, vorzugsweise von einer vorgespannten Feder, da dadurch sichergestellt ist, daß auch beim Ausfall des Antriebsmotors aufgrund der äußeren Umstände, wie z.B. die erhöhte Temperatur, die notwendige Bewegung durchgeführt wird. In solchen Fällen wird der Kraftspeicher vorgespannt, wenn durch den Antriebsmotor das Stellglied von einer Grundstellung in die Betriebsstellung gebracht wird, in der das Stellglied im Normalfall verbleibt. Es kann jedoch auch notwendig sein, daß beispielsweise das Stellglied temperaturabhängig in relativ kurzen Zeitabständen in andere Stellungen verfahren wird. Derartige Antriebe werden auch als Federrückläufer bezeichnet. Die in Frage kommende Verstellvorrichtung wird häufig auch dort eingebaut, wo beengte Platzverhältnisse bzw. geringe Einbauräume vorhanden sind. Es muß deshalb auf eine äußerst kompakte Bauweise geachtet werden. Durch eine kompakte Bauweise werden die Einsatzmöglichkeiten auch erhöht.

Bei den in Frage kommenden Verstellvorrichtungen ist es notwendig, daß beispielsweise die Stellung des Stellgliedes oder auch die eines Bauteiles des Antriebszuges festgestellt werden kann oder daß bedarfsweise das Stellglied oder ein Bauteil des Antriebszuges in eine bestimmte, vorzugsweise wählbare Stellung gefahren werden kann. Dies erfolgt mittels des Registriergerätes, welches Teil der Verstellvorrichtung ist. Normalerweise wird als Registriergerät ein Potentiometer bzw. ein Regelwiderstand verwendet.

Bei den bisher bekannten Verstellvorrichtungen der in Rede stehenden Art ist das Stellelement des Potentiometers mit einem Bauteil des Antriebszuges oder des Stellgliedes über ein entsprechendes Getriebe oder einen ähnlichen Antriebsblock gekoppelt. Dadurch wird zunächst einmal die Anzahl der Bauteile erhöht. Außerdem ist es unvermeidbar, daß beispielsweise durch Spiel zwischen Zahnrädern oder durch eine elastische Verformung von Bauteilen das Ergebnis ungenauer wird.

Aus der DE 195 40 323 A1 ist ein Drosselklappenstutzen bekannt, der für Brennkraftmaschinen ausgelegt ist. Durch den Drosselklappenstutzen verläuft ein Gaskanal, der von einem Luftfilter zu einem Brennraum der Brennkraftmaschine oder zu mehreren Brennräumen führt. Quer durch den Gaskanal erstreckt sich eine Drosselklappenwelle, die an einer Seite mit Hilfe eines Lagers im Drosselklappenstutzen schwenkbar gelagert ist. An der Drosselklappenwelle ist eine Drosselklappe befestigt, die zwischen zwei Endstellungen um 90° geschwenkt werden kann. In der einen Endstellung verschließt die Drosselklappe den Gaskanal nahezu vollständig. In der anderen Endstellung des Schwenkbereiches der Drosselklappenwelle ist der Gaskanal maximal geöffnet. Auf der Drosselklappenwelle ist ein Zahnsegment aufgesetzt, welches über einen Zapfen mit dem Träger eines um eine Drehhalterung beweglichen Potentiometers verbunden ist. Diese Verbindung ist demzufolge als formschlüssig anzusehen. Eine solche Lösung ist jedoch in der Heizungs-, Klima- und Lüftungstechnik nicht einsetzbar, da je nach dem Einsatzfall der Verstellvorrichtung ein bestimmter Verstellwinkel vorgegeben ist.

Darüber hinaus besteht der Drosselklappenstutzen aus einer relativ hohen Anzahl von Bauteilen. Eine exakte Einstellung von zwei vorgegebenen Stellungen ist mit dieser Lösung nicht möglich.

Der Erfindung liegt die Aufgabe zugrunde, eine Verstellvorrichtung der eingangs näher beschriebenen Art so zu gestalten, daß die Anzahl der Bauteile so gering wie möglich gehalten wird, so daß eine kompakte Bauweise möglich ist. Außerdem soll die Einstellung so exakt wie möglich vorgenommen werden.

Die gestellte Aufgabe wird gelöst, indem die formschlüssige Verbindung durch meh-rere im Raum zwischen den Zähnen und der Drehachse eines Zahnsegmentes vorgesehene. Bohrungen und einen Zapfen gebildet ist, der in eine der Bohrungen eingreift.

Durch die direkte Anbindung des Stellelementes des Registriergerätes, vorzugsweise des Potentiometers entfallen Stifte, Bolzen, Zahnräder u.dgl. Dadurch wird nicht nur die Anzahl der Bauteile minimiert, sondern auch das Spiel oder die elastische Verformung von miteinander in Funktion stehenden Bauteilen. Durch die minimale Anzahl von Bauteilen wird auch eine äußerst kompakte Bauweise möglich, so daß das Einsatzgebiet erweitert wird: Zweckmäßigerweise ist das Stellelement des Registriergerätes mit dem Abtriebsglied des Antriebszuges gekoppelt. Daraus ergibt sich der große Vorteil, daß das Registriergerät so nah wie möglich an dem zu verstellenden Stellglied angeordnet ist, da auch für die antriebstechnische Verbindung zwischen dem Abtriebsglied des Antriebszuges und dem Stellglied möglichst wenig Bauteile verwendet werden sollen. Auch die Umkehrung ist denkbar, daß das Abtriebsglied des Antriebszuges einen Zapfen aufweist, der in eine Bohrung des Stellgliedes des Registriergerätes eingreift. Das Abtriebsglied des Antriebszuges ist in bevorzugter Ausführung ein Zahnsegment, in welches eine Hohlwelle eingesetzt ist, die mit einer inneren Profilierung versehen ist, zur Verbindung mit dem Stellglied. Das Registriergerät bzw. das Potentiometer ist demzufolge zweckmäßigerweise ein ring- oder segmentartiges Potentiometer, welches angrenzend an das Abtriebsglied die Welle über einen entsprechenden Winkel umgreift.

Anhand der beiliegenden Zeichnung wird die Erfindung noch näher erläutert. Es zeigt:

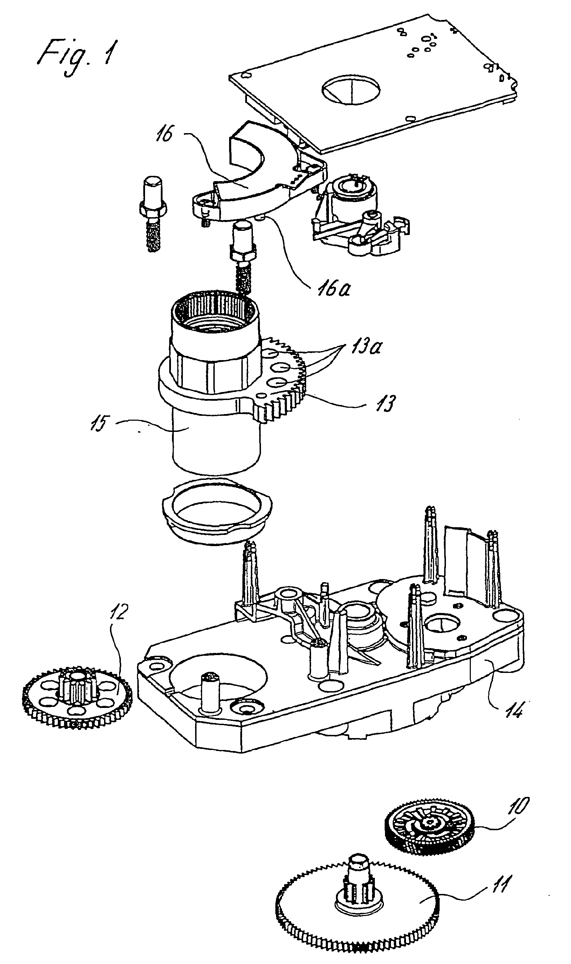

- Figur 1: einen Teil der erfindungsgemäßen Verstellvorrichtung in einer sprengbildlichen Darstellung.

Die Verstellvorrichtung enthält mehrere, ebenfalls mehrere Getriebestufen bildende Zahnräder 10, 11, 12, 13, die in nicht näher erläuterter Weise miteinander derart in Eingriff stehen, daß die Drehzahl des nicht dargestellten Antriebsmotors deutlich reduziert wird. Die Zahnräder 10 bis 13 sind an einem Antriebsträger 14 gelagert. Die genannten Teile sind in einem nicht dargestellten Gehäuse angeordnet. Das Zahnrad 13 ist als Zahnsegment ausgebildet und stellt das Abtriebsglied des Antriebszuges dar. In eine mehreckige Bohrung des Zahnsegmentes 13 ist eine Hohlwelle 15 eingesetzt. Diese Hohlwelle 15 wird von einem Registriergerät in Form eines segmentartigen Potentiometers 16 umgriffen, welches formschlüssig mit dem Zahnsegment 13 verbunden ist. Im dargestellten Ausführungsbeispiel trägt das Stellelement des Potentiometers 16 einen Zapfen 16a, der in eine von vier im Zahnsegment 13 vorgesehenen Bohrungen 13a eingreifen kann. Die Funktion des Potentiometers ist allgemein bekannt und wird deshalb nicht mehr erläutert. Es ergibt sich aus der Figur, daß durch die Kopplung mit dem Abtriebsglied 13 des Antriebszuges das Potentiometer 16 in Nähe des zu verstellenden Stellgliedes angeordnet ist, so daß die sich aus elastischer Verformung ergebende Ungenauigkeit, sofern überhaupt vorhanden, vernachlässigt werden kann.

Da die Verstellvorrichtung u.a. auch als Sicherheitselement für Gebäude verwendet werden kann, ist vorgesehen, daß alle Funktionselemente aus einem temperaturbeständigen Material, beispielsweise aus Stahl oder einem Buntmetall gefertigt sind.

Die Erfindung ist nicht auf das dargestellte Ausführungsbeispiel beschränkt. Wesentlich ist, daß das Registriergerät, beispielsweise ein Potentiometer, direkt mit einem beweglichen Bauelement, vorzugsweise mit dem Abtriebsglied des Antriebszuges gekoppelt ist. Die Verstellvorrichtung kann auch als Kleinst- oder Kompaktantrieb bezeichnet werden.

## Patentansprüche

1. Verstellvorrichtung für einstellbare Klappen in der Heizungs-, Lüftungs- und Klimatechnik, mit einem Antriebsmotor, der mit einem Antriebszug (10, 11, 12, 13, 14) gekoppelt ist, dessen Abtriebsglied (13) mit einem Stellglied verbunden ist, mit einem Registriergerät (16) zur Positionserkennung und/oder Positionseinstellung des Stellgliedes und/oder eines Bauelementes des Antriebszuges, wobei das Stellelement des Registriergerätes (16) direkt mit dem Abtriebsglied (13) des Antriebszuges (10, 11, 12, 13, 14) formschlüssig, jedoch zahnradlos gekoppelt ist, **dadurch gekennzeichnet, daß** die formschlüssige Verbindung durch mehrere im Raum zwischen den Zähnen und der Drehachse eines Zahn- segmentes vorgesehene Bohrungen (13a) und einen Zapfen (16a) gebildet ist, der in eine der Bohrungen (13a) eingreift.

2. Verstellvorrichtung nach Anspruch 1, **dadurch gekennzeichnet, daß** das Registriergerät ein Potentiometer (16) ist, welches ring- oder segmentförmig gestaltet ist.

3. Verstellvorrichtung nach Anspruch 1 oder 2, **dadurch gekennzeichnet, daß** in das Abtriebsglied (13) eine Hohlwelle (15) form- und/oder kraftschlüssig eingesetzt ist, welches mit einem Stellglied eine Innenprofilierung trägt, und dass das Potentiometer (16) direkt angrenzend an das Abtriebsglied (13) angeordnet ist und die Hohlwelle (15) ganz oder teilweise umschließt.

## Claims

1. Adjuster device for adjustable flaps in heating, ventilation and air-conditioning systems, comprising a drive motor which is coupled to a drive train (10, 11, 12, 13, 14) of which the output member (13) is connected to an actuating member, and also comprising a recording unit (16) for positional recognition and/or positional adjustment of the actuating member and/or of a component of the drive train, wherein the actuating element of the recording unit (16) is coupled directly to the output member (13) of the drive train (10, 11, 12, 13, 14) in a form-fitting manner, but without a gearwheel connection, **characterized in that** the form-fitting connection is formed by a plurality of bores (13a), which are provided in the space between the teeth and the axis of rotation of a toothed segment, and a pin (16a) which engages in one of the bores (13a).

2. Adjuster device according to Claim 1, **characterized in that** the recording unit is a potentiometer (16) which has a ring-shaped or segment-shaped design.

3. Adjuster device according to Claim 1 or 2, **characterized in that** a hollow shaft (15), which bears an inner profiling engaging with an actuating member, is inserted into the output member (13) in a form-fitting and/or force-fitting manner, and **in that** the potentiometer (16) is arranged directly adjacent to the output member (13) and completely or partially encloses the hollow shaft (15).

## Revendications

1. Dispositif de réglage pour des volets réglables dans la technique du chauffage, de la ventilation et de la climatisation, avec un moteur d'entraînement qui est accouplé à un train d'entraînement (10, 11, 12, 13, 14), dont l'organe de sortie (13) est relié à un organe d'actionnement, avec un appareil d'enregistrement (16) pour la détection de la position et/ou le réglage de la position de l'organe d'actionnement et/ou d'un élément structurel du train d'entraînement, l'élément de réglage de l'appareil d'enregistrement (16) étant directement accouplé à l'organe de sortie (13) du train d'entraînement (10, 11, 12, 13, 14) par complémentarité de formes toutefois sans roue dentée, **caractérisé en ce que** la liaison par complémentarité de formes est formée par plusieurs perçages (13a) prévus dans l'espace entre les dents et l'axe de rotation d'un secteur denté et par un tenon (16a) qui s'engage dans l'un des perçages (13a).

2. Dispositif de réglage selon la revendication 1, **caractérisé en ce que** l'appareil d'enregistrement est un potentiomètre (16) qui est conçu en forme d'anneau ou de secteur.

3. Dispositif de réglage selon la revendication 1 ou 2, **caractérisé en ce que** dans l'organe de sortie (13) un arbre creux (15) est inséré par complémentarité de formes et/ou à force, lequel porte avec un organe d'actionnement un profilage intérieur et **en ce que** le potentiomètre (16) est disposé directement de manière contiguë à l'organe de sortie (13) et entoure totalement ou partiellement l'arbre creux (15).
